# DEMANDE DE BREVET EUROPEEN

(11) **EP 0 623 384 A1**
(43) Date de publication de la demande: **09.11.1994**
(21) Numéro de dépôt: 94400887.9
(22) Date de dépôt: 25.04.1994
(51) Int. Cl.: B01J 23/62, B01J 37/02, C10G 35/09

(54) **Procédé de préparation de catalyseurs utilisables en déshydrogénation**

(30) Priorité: 06.05.1993 FR 9305552
(71) Demandeur: INSTITUT FRANCAIS DU PETROLE, F-92502 Rueil-Malmaison (FR)
(72) Inventeur: Le Peltier, Fabienne, F-92500 Rueil Malmaison (FR); Robert, Sylvie, F-92500 Rueil Malmaison (FR); Boitiaux, Jean-Paul, F-78300 Poissy (FR); Didillon, Blaise, F-92500 Rueil Malmaison (FR); Clause, Olivier, F-78400 Chatou (FR)

(57) **Abrégé**

Procédé de préparation d'un catalyseur, ledit catalyseur comprenant au moins un support inorganique réfractaire, au moins un halogène ou composé halogéné, à une teneur pondérale supérieure de 0,1 %, et au moins un métal du groupe VIII de la classification périodique (platine, palladium, nickel et ruthénium) et au moins un métal additionnel M choisi parmi le germanium, I'étain, le plomb, le fer, le titane et le chrome caractérisé en ce que ledit métal M est introduit, sous la forme d'au moins un complexe organométallique. Le catalyseur préparé selon l'invention convient pour les réactions de déshydrogénation, notamment d'hydrocarbures paraffiniques en hydrocarbures oléfiniques.

## Description

La présente invention concerne un nouveau procédé de préparation d'un catalyseur contenant un halogène ou composé halogéné, à base d'au moins un métal du groupe VIII de la classification périodique des éléments modifié par ajout d'au moins un métal additionnel qu'il est nécessaire de mettre en intéraction avec le métal de base pour obtenir un nouveau catalyseur plus performant, et éventuellement au moins un autre métal choisi dans le groupe constitué par les métaux alcalins et/ou un métalloide tel que le soufre.

Les brevets et publications démontrant que l'addition de promoteurs à un métal de base améliore la qualité des catalyseurs sont fort nombreux. Ces éléments sont ajoutés sous différentes formes tels que sels ou composés organométalliques. On obtient généralement des catalyseurs plus actifs ou plus sélectifs, parfois plus stable que le catalyseur monométallique correspondant.

Ces catalyseurs renferment au moins un support, au moins un halogène ou composé halogéné, au moins un métal de la famille du groupe VIII, et un métal additionnel (dénommé ci-après métal M) choisi parmi le germanium, I'étain, le plomb, le fer, le titane et le chrome. Le catalyseur contient aussi éventuellement et de manière préférée au moins un métal alcalin ou alcalino-terreux et éventuellement également comme indiqué ci-dessus un élément choisi parmi les métalloides (soufre par exemple).

Ils s'utilisent en particulier dans un procédé catalytique de déshydrogénation d'une charge d'hydrocarbures comportant principalement des paraffines comprenant de 2 à 5 atomes de carbone par molécule, c'est à dire des paraffines C₂-C₅. La réaction de déshydrogénation s'effectue en général à une pression comprise entre 0,2 et 20 bar absolus (1 bar = 0,1 MPa) sous une pression préférée de 1 à 10 bars absolus, et à une température comprise entre 400 et 800 °C en fonction de la nature de la charge. La température est avantageusement comprise entre 560 et 700 °C pour une charge comprenant principalement du propane, entre 450 et 600 °C pour une charge comprenant pricipalement de l'isobutane et entre 400 et 550 °C pour une charge comprenant principalement de l'isopentane. La charge peut aussi contenir des hydrocarbures insaturés comportant de 2 à 5 atomes de carbone par molécule. Il peut être avantageux d'utiliser de l'hydrogène comme diluant.

Le rapport molaire hydrogène/hydrocarbure est généralement compris entre 0 et 20 et de préférence entre 0 et 6. Les vitesses spatiales volumiques (par rapport à la charge liquide) préconisées sont habituellement de 0,5 à 100 h⁻¹ et préférentiellement de 1,5 à 50 h⁻¹.

Les formulations des catalyseurs de déshydrogénation ont fait l'objet d'un très grand nombre d'études. Les catalyseurs métalliques supportés ont été décrits notamment dans les brevets US-A-3 531 543 et US-A-3 909 451. Ils contiennent une phase métallique à base de platine, modifiée par un métal additionnel M tel que l'étain, supportés sur des oxydes inorganiques réfractaires telle que l'alumine. L'introduction du métal M est avantageusement effectuée à l'aide d'un composé organométallique dudit métal M. Cette méthode d'introduction du métal M a déjà été décrite dans le brevet US-A-3 531 543. Dans ce brevet la teneur pondérale en composé halogéné la plus faible possible est recherchée pour ces catalyseurs.

L'invention concerne un procédé de préparation d'un catalyseur consistant à introduire dans une masse catalytique calcinée et activée, appelée précatalyseur, et renfermant au moins un support, au moins un métal du groupe VIII de la classification périodique des éléments, au moins un métal alcalin ou alcalino-terreux, au moins un halogène ou composé halogène, au moins un métal additionnel M choisi dans le groupe constitué par le germanium, I'étain, le plomb, le fer, le titane et le chrome.

De préférence, le procédé est caractérisé en ce que
a) dans une première étape de ladite préparation, on prépare hors site ledit précatalyseur le précatalyseur étant à ce stade éventuellement soumis à un séchage et étant soumis à une calcination,
b) on soumet alors le précatalyseur à un traitement d'activation en atmosphère neutre (gaz inerte) ou en atmosphère réductrice et,
c) dans une deuxième étape de ladite préparation, on introduit ledit métal additionnel M dans le précatalyseur, par mise en contact d'au moins un composé organique du métal additionnel M.

Plus précisément, on a maintenant découvert de manière surprenante, et ceci fait l'objet de la présente invention, un catalyseur, caractérisé en ce qu'il contient des teneurs élevées en halogène (supérieures à 0,1 %) ou composé halogéné et qu'il est préparé par mise en contact d'au moins un composé organométallique du métal additionnel M avec un précatalyseur. Le précatalyseur est, dans la présente invention un catalyseur renfermant au moins un support, au moins un métal du groupe VIII de la classification périodique des éléments, éventuellement au moins un métal alcalin ou alcalino-terreux, éventuellement au moins un métalloide. Ce précatalyseur ne renferme pas ledit métal additionnel M.

L'addition de ce métal additionnel M est réalisée en phase liquide ou en phase gazeuse. Cette opération de fixation du métal additionnel M peut être réalisée entre 20 et 500 °C.

On a ainsi découvert qu'en opérant en présence de catalyseurs préparés selon l'invention, ces catalyseurs possédaient une activité et une durée de vie accrues et une meilleure régénérabilité, par rapport aux catalyseurs de l'art antérieur, préparés selon les techniques de l'art antérieur.

Le support du catalyseur selon l'invention comporte au moins un oxyde réfractaire qui est généralement choisi parmi les oxydes des métaux des groupes IIA, IIIA ou IVA de la classification périodique des éléments tels que par exemple les oxydes de magnésium, d'aluminium, de silicium pris seuls ou en mélange entre eux ou en mélange avec d'autres oxydes d'éléments de la classification périodique. Le support préféré est l'alumine, dont la surface spécifique est avantageusement comprise entre 50 et 400 m² par gramme, de préférence entre 100 et 400 m² par gramme.

Le métal du groupe VIII est choisi parmi les métaux tels que le platine, le palladium, le nickel et le ruthénium, de préférence le platine.

L'halogène ou composé halogéné est choisi parmi le fluor, chlore, brome, et iode pris seuls ou en mélange entre eux. Le chlore ou les composés chlorés sont préférés.

Le métal additionnel M est choisi parmi le germanium, I'étain, le plomb, le fer, le titane et le chrome. L'étain et le germanium sont les éléments préférés.

Le catalyseur contient éventuellement et de manière préférée au moins un métal alcalin ou alcalino-terreux tel que le potassium. Le catalyseur contient en outre éventuellement du soufre.

Le catalyseur selon l'invention renferme de préférence en poids par rapport au support :
(a) de 0,01 à 2 % d'au moins un métal noble de la famille du groupe VIII,
(b) de 0,5 à 3 % d'au moins un halogène ou composé halogéné,
(c) de 0,01 à 3 % d'au moins un élément additionnel M,
(d) de 0,5 à 3 % d'au moins un métal alcalin ou alcalino-terreux lorsque le catalyseur renferme un tel métal.

Une des formules catalytiques préférées selon l'invention contient de 0,1 à 1 % poids de platine, de 0,1 à 2 % de chlore, de 0,01 à 1 % en poids du métal additionnel M et de 0,1 à 1,5 % en poids de potassium. Le catalyseur peut contenir de 0,005 à 1 % poids de soufre.

La préparation du précatalyseur, précurseur du catalyseur fini, se fait selon toute technique connue de l'homme du métier.

Dans une technique préférée de préparation du catalyseur selon l'invention, le précatalyseur est préparé à partir d'un support préformé selon les méthodes classiques consistant à imprégner le support au moyen de solutions de composés des éléments que l'on désire introduire. On utilise soit une solution commune des métaux présents dans le catalyseur soit des solutions distinctes dans un ordre quelconque. Quand on utilise plusieurs solutions, on peut procéder à des séchages et/ou des calcinations intermédiaires. On termine habituellement par une calcination par exemple entre 500 et 1000 °C ; de préférence en présence d'oxygène libre, par exemple en effectuant un balayage d'air.

Le métal alcalin ou alcalino-terreux, lorsque le catalyseur contient ce type de métal, peut être introduit dans le support au moyen d'une solution aqueuse contenant des sels décomposables dudit métal sous forme de nitrate, de carbonate ou d'acétate, comme par exemple le carbonate de potassium.

L'introduction du métal du groupe VIII est effectuée de préférence par imprégnation du support par une solution aqueuse d'un composé halogéné. Le platine est préférentiellement introduit sous forme d'acide chloroplatinique. Après l'introduction du métal du groupe VIII, le produit obtenu est calciné après un éventuel séchage la calcination est effectuée de préférence à une température comprise entre 400 et 700 °C en présence d'un composé organique halogéné. Les composés organiques halogénés sont choisis par exemple dans le groupe formé par le tétrachlorure de carbone, le chloroforme, le dichlorométhane et le dichloropropane.

En vue de procéder à l'introduction du métal M, le précatalyseur est éventuellement séché et est soumis à une calcination sous atmosphère oxydante entre 300 et 650 °C. Selon l'invention, le précatalyseur est ensuite soumis à un traitement d'activation sous atmosphère réductrice (hydrogène) ou neutre (azote ou autre gaz inerte). La solution préférée est un traitement d'activation sous hydrogène à haute température par exemple entre 300 et 600 °C. Cette réduction peut consister par exemple en une montée lente de la température sous courant d'hydrogène jusqu'à la température maximale de réduction, comprise par exemple entre 300 et 600 °C suivie d'un maintien sous hydrogène pendant 1 à 6 heure à cette température.

Après avoir ajusté la température à la valeur désirée, comprise entre 20 et 500 °C, de préférence sous débit d'hydrogène, on procède ensuite à l'introduction du métal M.

Ensuite le solvant d'imprégnation est éliminé si nécessaire et l'on termine habituellement par une calcination par exemple entre 300 et 600 °C ; de préférence en présence d'oxygène libre, par exemple en effectuant un balayage d'air pendant plusieurs heures.

Le métal additionnel M est introduit dans le précatalyseur sous la forme d'au moins un composé organométallique ou alcoolate choisi dans le groupe formé par les complexes, en particulier les complexes carbonyles, polycétoniques des métaux M, et les hydrocarbylmétaux du métal M tels que les alkyles, les cycloalkyles, les aryles, les alkylaryles métaux et les arylalkyles métaux.

L'introduction du métal M est avantageusement effectuée à l'aide d'une solution dans un solvant organique du composé alcoolate ou organométallique dudit métal M. On peut également employer des composés organo-halogénés des métaux M. Comme composés de métaux M on citera en particulier, l'hexacarbonyle de fer, l'isopropylate de titane, le dichlorodicyclo-pentadienyle de titane, le tétrabutylétain, le tétraméthylétain, le tétrapropylgermanium, le diphénylétain, le tétraéthylplomb.

Le solvant d'imprégnation est choisi dans le groupe constitué par les solvants organiques oxygénés contenant de 2 à 8 atomes de carbone par molécule, et les hydrocarbures paraffiniques, naphténiques ou aromatiques contenant essentiellement de 6 à 15 atomes de carbone par molécule et les composés organiques halogénés contenant de 1 à 15 atomes de carbone par molécule. On peut citer l'éthanol, le tétrahydrofuranne, le n-heptane, le méthyl cyclohexane, le toluène et le chloroforme. On peut utiliser ces solvants pris seuls ou en mélange entre eux.

Une méthode préférée de préparation de catalyseurs selon l'invention consiste à opérer comme suit:
(a) on imprègne un support, contenant éventuellement un composé alcalin ou alcalino-terreux, à l'aide d'une solution aqueuse contenant au moins un métal du groupe VIII. On obtient ainsi une masse catalytique appelée précédemment "précatalyseur".
(b) on sèche la masse catalytique (ou précatalyseur) obtenue,
(c) on calcine la masse catalytique obtenue, puis conformément à l'invention,
(d) on réduit la masse catalytique
(e) on met en contact la masse catalytique réduite avec le composé organique du métal additionnel M pur ou solubilisé dans un solvant hydrocarboné
(f) si nécessaire on élimine le solvant
(g) on calcine la masse catalytique contenant le platine ou le métal noble de la famille du platine et le métal additionnel M.

Les exemples qui suivent illustrent l'invention sans toutefois en limiter la portée.

### EXEMPLE 1

On prépare trois catalyseurs A à C renfermant tous les trois 0,6 % en poids de platine, 0,45 % en poids d'étain et 1 % en poids de potassium. Le support est une alumine de surface spécifique de 220 m² par gramme et de volume poreux de 0,60 cm³ par gramme.

### Préparation du catalyseur A (comparatif) sans chlore

Le catalyseur A est préparé à partir de 80 g de support alumine. Le solide est d'abord calciné à 530 °C pendant 2 heures sous un débit d'air de 80 litres par heure. On ajoute 48 cm³ d'une solution aqueuse contenant 1,4 g de carbonate de potassium puis l'échantillon est calciné pendant 2 heures à 530 °C.

On procède alors à l'imprégnation du platine, en ajoutant aux 80 g de solide, 400 cm³ d'une solution de toluène contenant 0,97 g de bisacétylacétonate de platine. On laisse 24 heures en contact, on sèche 1 heure à 120 °C puis on calcine pendant 2 heures à 530 °C. Ensuite le catalyseur est réduit 2 heures sous un débit d'hydrogène de 80 litres par heure à 450 °C.

Sur 15 g du produit réduit qu'on appelle "précurseur" contenant le potassium et le platine, on procède alors à l'imprégnation de l'étain en ajoutant 45 cm³ d'une solution de n-heptane contenant 0,4 g de tétrabutylétain. On laisse en contact 8 heures à la température ambiante sous un débit d'hydrogène de 85 litres par heure. Le solide obtenu est essoré puis séché à 120 °C et ensuite calciné à 530 °C pendant 2 heures.

### Préparation du catalyseur B (selon l'invention) à 0,6 % poids de chlore

Sur 80 g de support d'alumine contenant 1 % en poids de potasium et préparé dans les mêmes conditions que celles de l'exemple précédent, on procède à l'introduction du platine et du chlore par ajout de 48 cm³ d'une solution aqueuse d'acide hexachloroplatinique contenant 0,48 g de platine. On laisse 4 heures en contact, on sèche 1 heure à 120 °C puis on calcine pendant 2 heures à 530 °C. Ensuite le catalyseur est réduit 2 heures sous un débit d'hydrogène de 80 litres par heure à 450 °C. Ensuite on procède à l'introduction de l'étain, à partir de tétrabutylétain sur 15 g du produit appelé "précurseur" contenant le platine, le potassium et le chlore dans les mêmes conditions que celles de l'exemple précédent.

### Préparation du catalyseur C (selon l'invention) à 1,5 % poids de chlore

Sur 80 g de suppport alumine contenant 1 % en poids de potasium et préparé dans les mêmes conditions que celles de l'exemple précédent, on procède à l'introduction du platine et du chlore par ajout de 48 cm³ d'une solution aqueuse d'acide hexachloroplatinique et d'acide chlorydrique contenant en tout 0,48 g de platine et 1,2 g de chlore. On laisse 4 heures en contact, on sèche 1 heure à 120 °C puis on calcine pendant 2 heures à 530 °C. Ensuite on procède à l'introduction de l'étain, à partir de tétrabutylétain sur 15 g du produit (ou précurseur) contenant le platine, le potassium et le chlore dans les mêmes conditions que celles de l'exemple précédent.

### EXEMPLE 2

Les catalyseurs A, B et C sont soumis à un test de déshydrogéntaion d'une charge d'isobutane pur (99,9 % d'isobutane et 0,1 % de n-butane) réalisé dans un réacteur tubulaire isotherme fontionnant en flux descendant à la pression atmosphérique. Le catalyseur est d'abord réduit 2 heures dans le réacteur sous 16,5 litres par heure d'hydrogène à 530 °C. Ensuite on injecte 16,5 litres par heure d'isobutane, ce qui correspond à un rapport molaire hydrogène sur hydrocarbure de 1 et à une vitesse spatiale massique de 100 h⁻¹, puis on stabilise la température à 580 °C. L'analyse des effluents gazeux se fait en ligne par chromatographie en phase gazeuse.
Les résultats obtenus dans ces conditions, exprimés en % poids, sont rapportés dans le tableau 1.

**Tableau 1**

| Catalyseur | durée (h) | conversion en iC₄ (%pds) | sélectivité en iC₄= (%pds) | rendement en iC₄= (%pds) |
|---|---|---|---|---|
| A | 2 | 17,3 | 94,2 | 16,3 |
| | 4 | 14,3 | 94,8 | 13,5 |
| | 6 | 13,4 | 94,8 | 12,7 |
| B | 2 | 22,6 | 95,8 | 21,6 |
| | 4 | 21,4 | 95,8 | 20,5 |
| | 6 | 21,3 | 95,9 | 20,4 |
| C | 2 | 36,0 | 93,0 | 33,5 |
| | 4 | 33,7 | 93,0 | 31,3 |
| | 6 | 33,7 | 93,1 | 31,4 |

Ces résultats indiquent clairement que les catalyseurs B et C préparés selon l'invention, avec des teneurs en chlore respectives de 0,6 et de 1,5 % en poids, ont des activités très nettement supérieures à celles du catalyseur A préparé selon l'art antérieur qui ne contient pas de chlore.

### EXEMPLE 3

### Préparation du catalyseur D (comparatif) à 1,5 % poids de chlore

On prépare un catalyseur D de même composition que le catalyseur C, renfermant 0,6 % en poids de platine, 0,45 % en poids d'étain et 1 % en poids de potassium et 1,5 % de chlore, selon les techniques de l'art antérieur, Le support est une alumine de surface spécifique de 220 m² par gramme et de volume poreux de 0,60 cm³ par gramme.

A 100 g de support d'alumine on ajoute 500 cm³ d'une solution aqueuse d'acide chlorhydrique. On laisse en contact trois heures, on essore, on sèche 1 heure à 120 °C. Sur le produit séché contenant du chlore, on procède alors à l'imprégnation du platine et de l'étain en ajoutant au solide 150 cm³ d'une solution d'acide hexachloroplatine et de chlorure stannique. La concentration en platine de cette solution est égale à 4,05 g par litre et la concentration en étain est de 3,04 g par litre. On laisse en contact 6 heures, on séche 1 heure à 120 °C puis on calcine 2 heures à 530 °C. Sur le produit calciné on procède à l'introduction du potassium par ajout de 60 cm³ d'une solution aqueuse contenant 1,7 g de carbonate de potassium, ensuite on l'échantillon est séché à 120 °C puis calciné pendant 2 heures à 530 °C.

### EXEMPLE 4

Les catalyseurs C et D sont soumis à un test de déshydrogéntaion d'une charge d'isobutane pur (99,9 % d'isobutane et 0,1 % de n-butane) réalisé dans un réacteur tubulaire isotherme fontionnant en flux descendant à la pression atmosphérique, 3,5 g de catalyseur sont réduits 2 heures dans le réacteur sous 20 litres par heure d'hydrogène à 530 °C. Ensuite on injecte 20 litres par heure d'isobutane, ce qui correspond à un rapport molaire hydrogène sur hydrocarbure de 1 et à une vitesse spatiale massique de 14 h⁻¹, puis on augmente la température à 560 puis à 580 °C. L'analyse des effluents gazeux se fait en ligne par chromatographie en phase gazeuse.

Les résultats obtenus dans ces conditions, exprimés en % poids, sont rapportés dans le tableau 2.

**Tableau 2**

| Catalyseur | température (°C) | conversion en iC₄ (%pds) | sélectivité en iC₄= (%pds) | rendement en iC₄= (%pds) |
|---|---|---|---|---|
| C | 1 | 47,5 | 87,0 | 41,3 |
| | 4 | 43,4 | 89,4 | 38,8 |
| | 6 | 42,8 | 89,8 | 38,4 |
| D | 1 | 38,0 | 85,0 | 32,3 |
| | 4 | 33,6 | 88,3 | 29,7 |
| | 6 | 32,4 | 89,5 | 29,0 |

Le catalyseur C préparé selon l'invention, à partir de tétrabutylétain est nettement plus actif que catalyseur D préparé selon les techniques de l'art antérieur.

## Revendications

**1 -** Procédé de préparation d'un catalyseur caractérisé en ce que
a) dans une première étape de ladite préparation, on prépare hors site un précatalyseur renfermant au moins un support, au moins un métal du groupe VIII de la classification périodique des éléments, au moins un métal alcalin ou alcalino-terreux, au moins un halogène ou composé halogène, le précatalyseur étant à ce stade éventuellement soumis à un séchage et étant soumis à une calcination,
b) on soumet alors le précatalyseur à un traitement d'activation en atmosphère neutre (gaz inerte) ou en atmosphère réductrice de façon à être en présence d'une masse catalytique calcinée et activée, et,
c) dans une deuxième étape de ladite préparation, on introduit un métal additionnel M choisi dans le groupe constitué par le germanium, I'étain, le plomb, le fer, le titane et le chrome.dans le précatalyseur, par mise en contact d'au moins un composé organique du métal additionnel M.

**2 -** Procédé selon la revendication 1 dans lequel le métal du groupe VIII est choisi dans le groupe constitué par le platine, le palladium et le ruthénium.

**3 -** Procédé selon la revendication 1 dans lequel le métal du groupe VIII est le nickel.

**4 -** Procédé selon l'une des revendications 1 à 3 dans lequel le support renferme au moins un oxyde réfractaire.

**5 -** Procédé selon l'une des revendications 1 à 4 dans lequel le catalyseur renferme également au moins un métalloïde.

**6 -** Procédé selon la revendication 5 dans lequel le métalloïde est le soufre.

**7 -** Procédé selon l'une des revendications 1 à 6 dans lequel, au cours de ladite deuxième étape, le composé organique du métal additionnel M est introduit en phase liquide ou en phase gazeuse.

**8 -** Procédé selon l'une des revendications 1 à 7 dans lequel, au cours de ladite deuxième étape, le composé organique du métal additionnel M est introduit sur le catalyseur dans au moins un solvant d'imprégnation lequel est une solution hydrocarbonée.

**9 -** Procédé selon l'une des revendications 1 à 8 dans lequel l'activation du précatalyseur est réalisée en atmosphère réductrice, en présence d'hydrogène entre 300 et 600 °C.

**10 -** Procédé selon l'une des revendications 8 et 9 dans lequel le métal additionnel M est introduit dans le précatalyseur sous la forme d'au moins un composé organométallique ou alcoolate.

**11 -** Procédé selon la revendication 10 dans lequel ledit composé organométallique ou alcoolate est choisi dans le groupe formé par les complexes carbonyles ou polycétoniques du métal M et les hydrocarbymétaux du métal M tels que les alkyles, cycloalkyles, aryles, alkylaryles et arylalkyles.

**12 -** Procédé selon l'une des revendications 8 à 11 dans lequel ledit composé organique de métal M est choisi dans le groupe constitué par l'hexacarbonyle de fer, l'isopropylate de titane, le dichlorodicyclopentadiényle de titane, le tétrabutylétain, le tétraméthylétain, le tétrapropylgermanium, le diphénylétain et le tétraéthyl plomb.

**13 -** Procédé selon l'une des revendications 8 à 12 dans lequel ledit solvant d'imprégnation dudit métal M est choisi dans le groupe constitué par les solvants organiques oxygénés comportant de 2 à 8 atomes de carbone par molécule, les hydrocarbures paraffiniques, naphténiques et aromatiques contenant 6 à 15 atomes de carbone par molécule et les composés organiques halogénés contenant 1 à 15 atomes de carbone par molécule.

**14 -** Procédé selon la revendication 13 dans lequel le solvant d'imprégnation est choisi dans le groupe constitué pat l'éthanol, le tétrahydrofuranne, le n-heptane, le méthylcyclohexane, le toluène et le chloroforme.

**15 -** Utilisation d'un catalyseur préparé selon l'une des revendications 1 à 20 dans les réactions de déshydrogénation de paraffines.
